# EUROPEAN PATENT APPLICATION

(11) **EP 4 752 071 A1**
(43) Date of publication of application: **03.06.2026**
(21) Application number: 24462002.7
(22) Date of filing: 27.11.2024
(51) Int. Cl.: B64U 10/60, B64U 50/34

(54) **EJECTABLE AERIAL POWER SUPPLY, UNMANNED AERIAL VEHICLE SYSTEM AND ITS OPERATING METHOD**

(71) Applicant: Budapesti Müszaki és Gazdaságtudományi Egyetem, 1111 Budapest (HU); TECHTRA Közhasznú Noprofit Zrt., 1113 Budapest (HU)
(72) Inventor: Balogh, Attila, H-8561 Adásztevel (HU); Futó, András, H-1221 Budapest (HU); Veréb, Szabolcs, H-1111 Budapest (HU)
(74) Representative: Kereszty, Marcell

(57) **Abstract**

The invention is an ejectable aerial power supply (10), an unmanned aerial vehicle system based thereon, and an operating method for the system. The aerial power supply (10) comprises a tether connecting unit (11), DC/DC converters (15, 25) for supplying energy from a connected tether (50) for on-board flight controller systems (41, 42) of an UAV (40), and a power control unit (20). The aerial power supply (10) further comprises an ejecting mechanism (30) that can be activated depending on energizing and charging conditions, and a descender device (31) that can be deployed after the aerial power supply (10) is separated from the UAV (40). (Fig. 1)

## Description

### TECHNICAL FIELD

The invention relates to an ejectable aerial power supply for unmanned aerial vehicles (UAVs), such as aerial drones, for providing a redundant power system, at least temporarily during UAV missions. The invention also relates to an unmanned aerial vehicle system comprising the ejectable aerial power supply, and to a method for operating the unmanned aerial vehicle system.

### BACKGROUND ART

UAVs may be utilized for many different purposes, for example for carrying out observation tasks by means of onboard sensors. The acquired data may be transmitted to a ground station. UAVs are usually powered by an onboard battery which is required to supply power for both propulsion, onboard sensors and other electronics. The battery life therefore determines a maximum mission length for the UAV. Other types of UAVs are powered via a tether deployed from a ground station during their operation, thereby extending mission length while restricting the mission flight area in most cases based on the length of the filament.

There is a number of known solutions to extend maximum mission lengths and ranges of UAVs, such as drones.

US 2022/0379747 A1 discloses a supplemental battery that is external to the airframe of an aircraft while also supplementing the power provided by internal batteries. The supplemental battery is housed in a battery containment structure to protect supplemental battery therein, which battery containment structure is tethered to the underside of fuselage by cables. A power cable provides electrical communication between the supplemental battery and the aircraft so as to allow the supplemental battery to supplement the power provided by internal batteries. The battery containment structure can be ejectable. The ejectable battery containment structure along with the ejectable supplemental battery may be ejected from the aircraft by severing the connection thereto at cable joints. The descent of the ejectable battery containment structure may be controlled or slowed using a parachute or drone coupled to ejectable battery containment structure.

US 10,040,370 B2 discloses a container including a battery that provides electricity to a vehicle such as an UAV that is carrying and shipping the container. The battery functions as a supplemental power supply to the vehicle and hence improves the endurance of the vehicle, so that heavier cargo can be shipped over longer distance.

US 10,926,890 B2 discloses an unmanned aircraft such as a tethered drone having an electrical power connection for receiving electrical power from a remote source, and a power delivery system for delivering electrical power to onboard applications equipment such as radio transmitters. To ensure that ground staff are not exposed to high levels of radiation from the transmitters, power is only delivered to the communications equipment after the aircraft has left the ground. A sensor associated with the aircraft's undercarriage may be used to detect when the aircraft is airborne. The applications equipment is powered from an accumulator which is only charged up from the power supply after launch. In the event of a failure of the power supply when airborne, the output of the accumulator is diverted to control propulsion and flight control systems, which are normally powered directly from the power supply, to allow a controlled descent, and thus shutting off the applications equipment before the aircraft returns to proximity to personnel on the ground.

US 10,703,474 B2 discloses a tethered UAV that may carry a payload. The payload may include camera, radio mast, or sensors. Power supply to the UAV via a tether cable from a ground station may be varied using a reconfigurable power converter. Further, the UAV may enter an autopilot mode based on a disruption of power supply from a power source at the ground station, on a low energy level of the power source, and on a temperature of the power converter. In the autopilot mode, power may be supplied to the UAV from an on-board battery and wireless communication may be initiated between the UAV and the ground station.

US 11,174,021 B2 discloses systems and methods for flight powering and controlling of an unmanned aerial vehicle. This known modular aerial vehicle system allows for switching between a number of different configurations, including a free-flying, battery powered configuration and a tethered configuration. The aerial vehicle may have a receptacle or "module bay" in its fuselage for receiving modules for configuring the aerial vehicle. One example of a module that can be received by the module bay is a battery power configuration module for configuring the aerial vehicle into a battery-operated mode. In some examples, the battery power configuration module includes a battery and circuitry associated with battery power management. In some examples, the battery power configuration module includes terminals that correspond to terminals located in the module bay such that, when the battery power configuration module is inserted into the module bay, the terminals of the battery power configuration module are in contact with the terminals in the module bay (e.g., for power transfer). Another example of a module that can be received in the module bay is a tethered configuration module. The tethered configuration module includes or is attachable to a lightweight tether for connection to a control or ground station, data linkage connectors which enable use of the tether as both the power conduit, and conveyance mechanism for command and control communications and telemetry return. The tethered configuration module may include terminals that correspond to terminals located in the module bay such that, when the tethered configuration module is inserted into the module bay, the terminals of the tethered configuration module are in contact with the terminals in the module bay (e.g., for power transfer, command and control information transfer, sensor information transfer, etc.). The aerial vehicle may also optionally include a pre-packed parachute. Under certain circumstances involving a sudden loss of high voltage power during operation, the aerial vehicle may be configured to automatically deploy the parachute. A disadvantage of this known solution is that during missions the tethered flight mode cannot be changed to battery-operated mode and that the UAV can not release the tethered power supply.

A continuing need exists for improvements of unmanned aerial vehicles for a variety of applications. There is a special need for a solution that enables during missions to change from a tethered flight mode to a battery-operated mode, however, none of the prior art documents disclose or suggest a solution to eliminate all tether-related dead weight in case of such a change of flight modes.

### DISCLOSURE OF INVENTION

It is an object of the invention to provide an ejectable aerial power supply, an unmanned aerial vehicle system and a method for its operation that eliminate disadvantages of prior art solutions as much as possible. Another objective of the invention is to improve the utilization of UAVs by enabling during missions to flexibly change from a tethered flight mode to a battery-operated mode, more specifically to eliminate all tether-related dead weight in case of such a change of flight modes. It is a specific object of the invention to enable for the UAV to release or eject its tethered power supply while maintaining full operability, to extend maximum mission lengths and ranges.

The above and other objects have been achieved by the ejectable aerial power supply according to claim 1, by the unmanned aerial vehicle system according to claim 11, by the method according to claim 13. Preferred embodiments are defined in the dependent claims.

### BRIEF DESCRIPTION OF DRAWINGS

Characteristics, objectives, and advantages of embodiments of the subject matter will become apparent from the following description, which is given solely by way of illustration, is non-limiting, and is to be read with reference to the appended drawings in which
Fig. 1 schematically illustrates an unmanned aerial vehicle system according to an embodiment of the invention, and
Fig. 2 schematically illustrates an untethered unmanned aerial vehicle with a plugged battery module instead of the ejectable aerial power supply.

### MODES FOR CARRYING OUT THE INVENTION

The subject matter disclosed herein comprises an ejectable aerial power supply, an unmanned aerial vehicle system and a method for its operation. Embodiments can include controlled operation of tethered unmanned aerial vehicles with which power, control and communication signals are transmitted to and from the unmanned aerial vehicle.

The subject matter specifically relates to a redundant power supply for a UAV with a flight control system. The redundant power supply has a primary supply and a secondary battery-based power system. The UAV is able to perform missions from either the primary supply or the secondary battery or both together. Each power source (battery) has a power management system that communicates with the redundant flight control system.

The inventive tethered on-board power supply is built from electrical and mechanical hardware and embedded software components. Its main function is to act as a primary power source and additionally to charge a secondary power source of a redundant power supply. In the event of a switch off of the tethered power supply, it can be ejected from the UAV to disconnect the tether for free flight and to reduce flying mass. The solution can also be operated with more than two on-board power supplies with multiple redundancy.

For short-range, extra-long flight missions, an ejectable on-board power supply is used instead of a primary battery. The on-board power unit is connected to a ground power station by a tether with power and communication channels. The on-board power supply preferably consists of an input voltage shaping unit that supplies the converted voltage to a galvanic isolation units. The power supply has two output channels which are galvanically isolated from each other and from the ground power supply. One of the output channels has a supply (typically constant) voltage regulated output power stage, including overvoltage and overcurrent protection. This channel provides power to the primary flight controller. The other output channel shall have a charging (typically constant) current regulated output power stage including overvoltage and overcurrent protection. This channel charges the secondary battery during flight and powers the secondary flight controller.

The on-board power supply communicates with the on-board power management system to ensure optimal power supply. The on-board flight control units are able to communicate with the ground station and send/receive data via a communication line. This arrangement allows the UAV to fly for long periods. The on-board power supply has an ejection and landing mechanism that can be activated by the flight controllers or by ground personnel. If the UAV needs to be released from the tethered power supply, the on-board units will notify the ground station via the communication line to interrupt ground power. Preferably after the ground power is cut off, the on-board power unit is ejected from the UAV while its landing mechanism is activated and the UAV can continue its mission in free flight from the secondary power source.

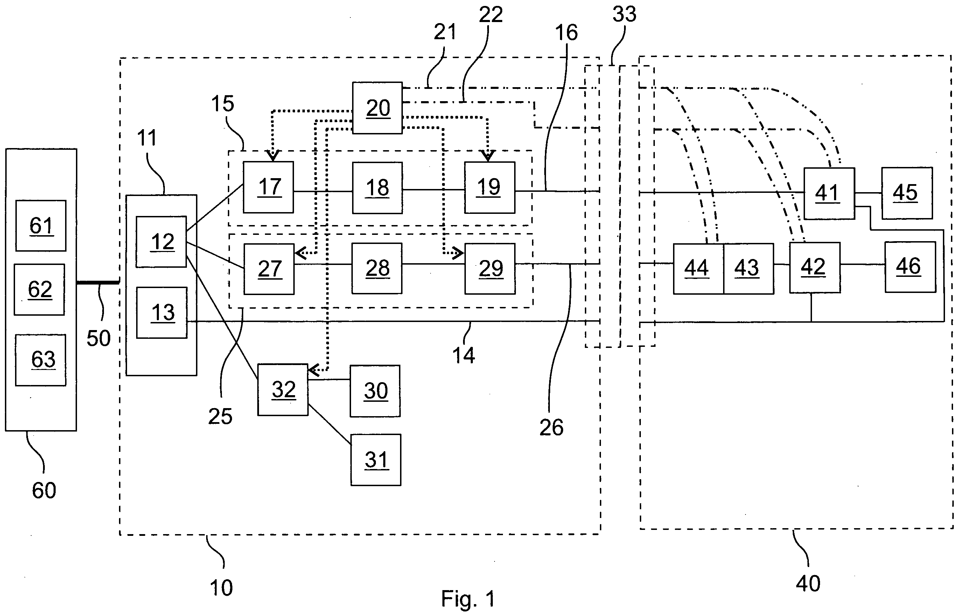

Fig. 1 illustrates an ejectable aerial power supply 10 and an unmanned aerial vehicle (UAV) 40, to which the aerial power supply 10 is attached.

The aerial power supply 10 comprises a tether connecting unit 11 having a power supply connector 12 and a communication connector 13. The power supply connector 12 is configured to receive a direct current (DC) supply delivered on a tether 50 connected to the tether connecting unit 11. The power supply connector 12 is preferably equipped with an overvoltage protection unit to mitigate a failure possibility of the power conversion.

The communication connector 13 is equipped with a transfer connection 14 which is configured to transfer communication arriving on the connected tether 50 to the UAV 40 and to transfer communication arriving from the UAV 40 on the connected tether 50. The transfer connection 14 is preferably an ethernet connection or an ethernet line. The communication connector 13 may therefore comprise a fiber to copper media converter configured to convert communication between an optical communication line of the connected tether 50 and the transfer connection 14.

The aerial power supply 10 further comprises a first DC/DC converter 15 fed via the power supply connector 12 and having a supply voltage output 16. The supply voltage output 16 is used to energize an on-board first flight controller system 41 of the UAV 40. The supply voltage output 16 provides a constant voltage output during operation, and can be switched off and adjusted/controlled as desired.

The aerial power supply 10 also comprises a second DC/DC converter 25 fed via the power supply connector 12 and having a charging current output 26. The charging current output 26 is used to charge an on-board secondary battery 43 of the UAV 40 energizing an on-board second flight controller system 42 of the UAV 40. The charging current output 26 preferably provides a constant current during most of the charging time, but can also be controlled according to a desired charging function depending on the state of charge of the of the on-board secondary battery 43.

The on-board first flight controller system 41 is preferably a primary flight controller with imaging, radar and GPS sensors, and it controls a first flight system 45 comprising preferably four electronic speed controllers with respective four motors and four rotors. The UAV 40 is able to perform missions with the primary or first flight system 45. The on-board second flight controller system 42 is preferably a secondary flight controller also with imaging, radar and GPS sensors, and it controls a second flight system 46 also comprising preferably four electronic speed controllers with respective four motors and four rotors. The UAV 40 is also able to perform missions with the secondary or second flight system 46. Thus, the preferred UAV 40 or drone totally has 8 rotors.

Both the primary and secondary flight controllers, i.e. both the on-board first and second flight controller systems 41, 42 are preferably connected together on the transfer connection 14, which is preferably an ethernet connection for enabling to carry out data transfer, flight control and data processing tasks. This network is also connected to a ground station 60 using a tether fiber-optic line. If the tether 50 is not connected, the UAV 40 is communicating with the ground station 60 in a wireless way. To avoid communication detection and minimize the jamming risks, if the tether 50 is connected, preferably all the communication is done on the fiber line with the ground station 60.

In the aerial power supply 10 a power control unit 20 controls a supply voltage on the supply voltage output 16 of the first DC/DC converter 15 and also controls a charging current on the charging current output 26 of the second DC/DC converter 25. Each of the first DC/DC converter 15 and the second DC/DC converter 25 are preferably formed as a galvanically isolated continuous mode resonant DC/DC converter having an input side single-phase inverter 17, 27, a frequency transformer with a resonant tank 18, 28 and an output side single-phase inverter 19, 29 used as an active rectifier. This LLC topology is advantageous to minimize system losses, to keep dissipation on a very low level and to enable to fit the power supply into a small cabinet. Of course, any other resonant topology like LCC, CLLC can be also used. If the weight and a size of the converter is not critical than traditional hard switching topologies (Buck, Boost, FORWARD, FLYBACK, phase shifted full bridge, dual-active-bridge) can be also used.

The power control unit 20 preferably connects the two energizing systems together and energize the payload system either from the primary system, i.e. from the aerial power supply 10, or from the secondary system, i.e. from the on-board secondary battery 43. The energy consumption from the primary and the secondary systems can be different resulting various state-of-charge situations of the on-board secondary battery 43. As the main loads are the first and second flight systems 45, 46, the power control unit 20 may be used for adjusting or balancing different thrusts on the motors of the first and second flight systems 45, 46.

The power control unit 20 is preferably an automotive grade digital signal processor (DSP) which controls the components to maintain a constant voltage on the supply voltage output 16 and to keep the on-board secondary battery 43 charged during missions.

As the UAV 40 has a redundant flight system and it can work from either the primary or the secondary of from both energy systems, one of those can be a ground power using the tether 50 in case of long (days, weeks, months) missions. Furthermore, if the tether 50 is detached, the UAV 40 is still able to continue free flying which can be used e.g. in recon missions. If not used any more during a mission, the aerial power supply 10 is ejected, so the dead weight and tether length thereof does not limit flight time and distance.

The power control unit 20 has at least one, preferably two redundant network connections 21, 22, more preferably two redundant controller area network (CAN) connections, for communication with the on-board first and second flight controller systems 41, 42 and with a battery management system 44 of the on-board secondary battery 43 of the UAV 40. This communication is used to provide information on the actual state of the power supply system and to maintain battery safety.

The secondary battery 43 is an energy source system which is used to energize the on-board second flight controller system 42 and the second flight system 46. The secondary battery 43 is equipped with the battery management system 44 which takes care of battery cells and sends status information for the on-board first and second flight controller systems 41, 42 on the CAN communication lines.

The most critical aspect of battery management systems is current sensing. From the sensed current the state of charge (SOC), state of health (SOH) and the capacity of the battery can be determined. For the accurate calculations mostly a commercially available so called two or four wire shunt resistor is used. The shunt resistor is a factory calibrated resistor with a very low temperature drift so it is a good choice for accurate measurements. The disadvantage of the shunt resistor is its relative high price and low heat conductivity, which results rather high peak temperatures on the shunt while the surrounding components have lower temperature, resulting in hot spots in the circuit. In a preferred embodiment the printed circuit board (PCB) copper layer itself is used as a shunt resistor. This results a better heat distribution as the whole PCB layer has nearly the same temperature avoiding hot spots. To maintain accuracy of the measurements on one hand all current measurement circuits are calibrated which eliminates the production variance in the copper resistance, on the other hand the temperature of the copper layer (shunt resistor) is measured on multiple places using commercially available surface mount thermal jumpers and the temperature dependent behaviour of the copper layer resistance is modelled in the battery management software which runs on a microcontroller. The additional benefit of this solution is that the current sensor does not generate extra cost as it is part of the printed circuit board.

The aerial power supply 10 further comprises an ejecting mechanism 30 that can be activated in the case if the on-board first flight controller system 41 of the UAV 40 is not energized by the supply voltage output 16 and the on-board secondary battery 43 of the UAV 40 is not charged by the charging current output 26. The ejecting mechanism 30 has an activated state effecting a separation of the aerial power supply 10 from the UAV 40.

Furthermore, the aerial power supply 10 also comprises a descender device 31 that can be deployed after the aerial power supply 10 is separated from the UAV 40. The descender device 31 is preferably a paraglider, a parachute or a glider.

Preferably, the aerial power supply 10 also comprises a power source 32, such as a third DC/DC converter for feeding the ejecting mechanism 30. Power source 32 is also preferably controlled by the power control unit 20. The ejecting mechanism 30 is preferably activated by the power control unit 20 by switching on the feeding of the ejecting mechanism 30.

The ejecting mechanism 30 may comprise at least one electromagnetic piston exerting a separating force for effecting said separation. The disconnection of the mixed power/signal connector 33 can be done using such electromagnetic pistons, which are able to provide the force to disconnect the connector and to push the aerial power supply 10 out from the UAV socket.

The aerial power supply may also comprise a release mechanism for releasing the descender device 31 upon activation, and a power source 32 feeding the release mechanism and controlled by the power control unit 20. The release mechanism may be activated by the power control unit 20 by switching on the feeding of the release mechanism.

The ejecting mechanism 30 preferably also comprises a safety locking mechanism having a locked state for locking the aerial power supply 10 to the UAV 40, and an unlocked state for enabling the separation of the aerial power supply 10 from the UAV 40 in the activated state of the ejecting mechanism 30. The safety locking mechanism prevents falling out of the aerial power supply 10 if the tether force is high. The unlocked state can be a switched off state in case of an electromagnetic safety locking mechanism. This mechanism can be also activated by hand on the ground to remove the aerial power supply 10. The same mechanism can also be used for a battery module 70 to be discussed later.

The aerial power supply 10 preferably further comprises a mixed power/signal connector 33 having electric connections for each of the supply voltage output 16, the charging current output 26, the at least one network connection 21, 22 being preferably the two CAN connections, and the transfer connection 14 being preferably a high speed ethernet connection. The mixed power/signal connector 33 makes the electrical connection between the on-board system and the power supply wires. The mixed power/signal connector 33 is formed with a shape that is complementary to a mating mixed power/signal connector of the UAV 40. During the ejection process the mixed power/signal connector 33 is dismantled from the mating mixed power/signal connector of the UAV 40. One side remains in the supply and one side remains on-board.

Fig. 1 illustrates a preferred embodiment of an unmanned aerial vehicle system, which comprises
- the UAV 40 programmed to operate in a tethered flight mode or in an untethered flight mode,
- the aerial power supply 10 attached to the UAV 40,
- the tether 50 having a first end and a second end, the first end being attached to the tether connecting unit 11 of the aerial power supply 10, and
- the ground station 60 to which the second end of the tether 50 is attached.

The ground station 60 has a tether rewind system 61, a landing platform, a communication and data processing system 62 for sending data to and receiving data from the UAV 40 on the tether 50, and a galvanically isolated DC/DC converter 63 converting a ground station voltage level to a tether voltage level for supplying voltage on the tether 50.

The ground station 60 is preferably a vehicle, e.g. passenger car, truck, military vehicle, unmanned ground vehicle, watercraft, in which case the galvanically isolated DC/DC converter 63 converts an on-board voltage level to the tether voltage level. A vehicle nominal voltage is typically either 12 V DC or 24 V DC supplied by on-board batteries, while the tether nominal voltage level is preferably within a DC range of 400 V to 600 V, more preferably 500 V DC or 550 V DC, to keep the tether mass and the tether cable heat dissipation on a low level.

In case of a 500 V DC nominal tether voltage the resonant power supply topology of the aerial power supply 10 allows to have 10% deviation in both direction in the supply voltage without any limitation in the power level which enables 450 V DC to 550 V DC normal operating voltage range for the on-board supply. Outside of the normal operating voltage range the nominal power of the supply will be reduced. Above the 550 V DC, the switching frequency has to be increased to maintain the output voltage and current, which leads to higher losses; in the 550 V DC to 600 V DC range the maximum output power of the supply is limited to 50% of the nominal power. In case of commercially available drone tether cables the 600 V DC is the usual allowed working voltage, so our supply maximal voltage is also limited to this voltage level. Below the 450 V DC, the switching frequency has to be decreased to maintain the output voltage and current, as a result of which the current of the resonant converter and the flux of the transformer is increasing which also leads to higher losses. The minimal working voltage of the converter is determined as 400 V DC and the maximum output power of the supply is limited to 50% of the nominal power in the 400 V DC to 450 V DC range. Below 400 V DC the on-board power supply is preferably disabled.

A normal operating voltage range is a 100 V DC range, which can be used to accommodate a voltage drop of the tether cable and for a ground supply voltage deviation. The commercially available tether cables' biggest limitation is the maximal operating temperature which is usually 85°C, above this temperature the fiber optic bandwidth may decrease. According to our measurements, to keep the cable below this temperature at 45°C ambient temperature in both fully winded up and winded down situation the current density of the cable has to be limited to 6 A/mm². The nominal power of the on-board supply, the maximal current density and the tether cross section area determine the nominal voltage of the converter.

The maximal length of the tether 50 from electrical point of view is determined by the voltage drop of the tether 50. If the ground station 60 is keeping the 500 V DC constant than a 50 V voltage drop determines the maximum tether length which is around 300 m.

The tether rewind system 61 may have an automatic tether tensioner system and a winch system comprising a tether force measurement system and a tether angle measurement system. The automatic tether tensioner system and the tether rewind system can be activated either by the ground station 60 or by the UAV 40.

The communication and data processing system 62 is preferably a high-speed communication and data processing system which sends/receives data to/from the drone and has remote connection with other ground stations. The communication is done on a bidirectional fiber optic line of the tether 50.

The inventive method for operating the unmanned aerial vehicle system in an ejection process starts with operating the UAV 40 in a tethered flight mode, in which the UAV 40 is communicatively connected via the tether 50 to the communication and data processing system 62 of the ground station 60.

The disconnecting and ejecting process can be activated either by the ground station 60 or by the UAV 40. In other words, the power supply eject process can be initiated by a ground staff sending an eject command to the flight controller on the tether fiber optic line or can be initiated by the UAV 40 itself in full autonomous mode, e.g. if it detects unidentified dangerous objects nearby which needs to be identified. In case the ejecting process is activated by the ground station 60, the ejecting command sent on the tether 50 is transferred via the transfer connection 14 to the on-board first and second flight controller systems 41, 42, which instruct via the network connections 21, 22 the power control unit 20 to energize the ejecting components. Before the disconnection is activated the current delivered on the tether 50 is preferably regulated to zero, to prevent welding of the connector pins. Upon an ejecting process for ejecting the aerial power supply 10 is initiated, the following steps are carried out.

It is checked whether the state of charge of the on-board secondary battery 43 of the UAV 40 is not below a threshold state of charge value. The state of charge is defined as the ratio of the available capacity and the maximum possible charge that can be stored in a battery, i.e., the nominal capacity. A fully charged battery has SOC 1 or 100% while a fully discharged battery has an SOC of 0 or 0%. The ejecting process is continued only if the state of charge of the on-board secondary battery 43 of the UAV 40 is on or above said threshold state of charge value. This is necessary for the UAV 40 to continue operation in an untethered mode. In case of a preferred embodiment, the threshold state of charge value is defined as 20%, as with this the UAV 40 is able to safely land. In case higher state of charge value is present, the flying range correspondingly increases.

It is also to be ensured that the UAV 40 is in a safe position for ejection. This includes checking whether the UAV 40 is above a first altitude threshold, e.g. 10 m, and if not, the UAV 40 is maneuvered up to at least the first altitude threshold. The first altitude threshold can vary depending on the power supply mass and shape, and on the paraglider or parachute opening time.

In order to avoid any arc or welding between electric contacts, the power control unit 20 sets the supply voltage output 16 to zero V and the charging current output 26 to zero A. The on-board second flight controller system 42 of the UAV 40 is energized with the on-board secondary battery 43 of the UAV 40. This will result the tether current to decrease to or near to zero which helps preventing the welding of the connector pins.

Next, the aerial power supply 10 is separated from the UAV 40 by activating the ejecting mechanism 30, and the descender device 31 is deployed after the aerial power supply 10 is separated from the UAV 40. The tether voltage level is also regulated to zero V on the ground station 60 for safety reasons.

In case the descender device 31 is a paraglider, the step of ensuring that the UAV 40 is in a safe position for ejection also includes at least one of the following:
- Checking whether the UAV 40 has headwind from the direction of the ground station 60, and if not, maneuvering the UAV 40 to a relative position with respect to the ground station 60 to have at least partial headwind from the direction of the ground station 60. This helps the paraglider to gain lifting force.
- Checking whether the UAV 40 is within an elevation angle range of 45° - 60° from the ground station 60, and if not, maneuvering the UAV 40 to a relative position with respect to the ground station 60 to be within an elevation angle range of 45° - 60° from the ground station 60. Thus, the UAV 40 has to be maneuvered to a position which is not above the ground station 60 to ensure lifting force on the paraglider.

The paraglider is preferably activated in an electromagnetic way. An opening force can be stored in a spring mechanism which can be activated with an electromagnetic piston. The energy to activate the electromagnetic piston can arrive from a discharging of on-board capacitors of the aerial power supply 10.

In the preferred embodiment an electromagnetic activation mechanism is used to eject the aerial power supply 10 and to open the paraglider. Of course, other solutions can also be used, such as compressed air or pyro charge, but in these cases refilling is necessary after activation. Electromagnetic pistons can be reused without any ground maintenance.

The ground station 60 which is preferably installed on a vehicle may have a variable speed winch mechanism, a tether force, a tether vertical and horizontal angle measurement and a rolled-off tether length calculation. The winch is preferably self-positioning in horizontal direction.

Preferably, after the aerial power supply 10 is ejected, the tether 50 is rewound by means of the tether rewind system 61 at least until the aerial power supply is above the landing platform 10 and is below a safe dropping second altitude threshold, e.g. 0.5 m, from the landing platform. The landing platform is allowed to move during the landing process, but only into the opposite direction compared to the aerial power supply 10 position. Paragliding is preferably done with a variable speed winch mechanism of the ground station 60 which tries to keep the paraglider at a specified return angle to be able arrive back to the landing platform. After the paraglider is opened using the tether angle and tether force data of the ground station 60, the ground station 60 starts the rewind process. From the tether angle and length, the altitude and distance of the aerial power supply 10 can be estimated. Depending on the winch speed the lifting force acting upon the aerial power supply 10 can be controlled.

After the aerial power supply 10 is ejected and a paraglider or other landing mode is electrically activated, preferably most of the energy of on-board capacitors are discharged. After the aerial power supply 10 is landed, the paraglide can be repacked into the aerial power supply 10 and the aerial power supply 10 can be reconnected to the UAV 40 after its arrival. In case the aerial power supply 10 is not ejected, the rewind system can also be used to support the UAV 40 maneuvering back to the landing platform.

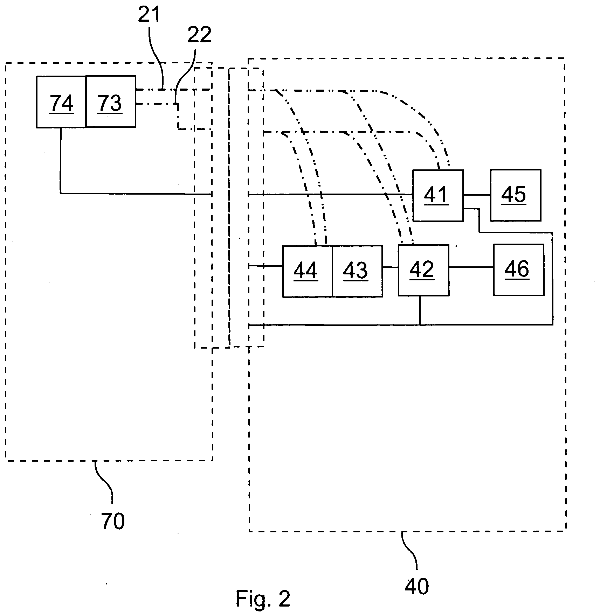

Fig. 2 schematically illustrates the same UAV 40 in an untethered operation, with a plugged battery module 70 instead of the ejectable aerial power supply 10, and serves for better understanding the system in which the invention can be applied.

The battery module 70 has a primary battery 74 with a battery management system 73, the latter preferably being of the same type as that of the secondary battery 43, which takes care of the battery cells and sends status information for both the on-board first and second flight controller systems 41, 42 on the same CAN communication lines like the ejectable aerial power supply 10. A power connector connects the battery voltage to the UAV 40 via a mixed power/signal connector, in case of using the primary battery 74 the supply voltage output connection is used for energizing the on-board first flight controller system 41 and the first flight system 45.

In an operation mode of Fig. 2, the charging current output pins of the mixed power/signal connector are unconnected, i.e. the secondary battery 43 cannot be charged in this situation. The transfer connection 14 pins of Ethernet pins of the mixed signal connector are also unconnected, i.e. there is no wired communication with the ground station 60 and communication is done via wireless data connection.

It can be seen that the tethered aerial power supply 10 can be replaced with the battery module 70 and vice versa. The tethered aerial power supply 10 and the battery module 70 preferably use the same power connection interface. Both of the aerial power supply 10 and the battery module 70 have their own unique ID which is shared on the CAN interface with the on-board electronics. As soon as the power supply is replaced, the flight controllers are informed. From the unique IDs it can be clearly detected whether a battery or a tethered power supply is connected. For the flight controllers the type of the power source carries important information as to suitable operation.

From electrical point of view (voltage, current, available power) there is preferably no difference between the tether supply and the battery, the main difference arises in the flying capabilities. If a battery is connected than there is no tether-based limitation in the flying range. If the tether supply is connected than there is a continuous tension force between the ground station 60 and the UAV 40 which has to be accommodated in the UAV control and of course the maneuvering capabilities and flying range of the UAV 40 are reduced.

The invention solves the problem of powering and charging redundantly powered UAVs from the tether, in such a way that the tethered unit can be disconnected from the UAV during operation. The advantage of the technology is that it can both replace one of the UAV's power sources and provide charging of the secondary power source. The power management systems and control circuits to control takeoff, flight operation and landing of the UAV 40, and data processors located in the ground station 60, together with the connecting communications network are configured to execute instructions to operate the system. The UAV 40 may draw power from either remote sources via the tether 50, from on-board batteries, or from both, as required by operator command or by autonomous control. This ability allows, among other features, a remote-powered aerial vehicle to have a power source for safe, controlled landings upon interruption of a tethered power source. In a general aspect, a modular aerial vehicle system allows for simple, modular switching between a number of different configurations, including a free-flying, battery powered configuration and a tethered configuration.

In some embodiments, the aerial power supply 10 can be designed to retrofit pre-existing aerial vehicles. For example, the aerial power supply 10 may be configured to fit into a bay or attach to standard attachment points of a pre-existing aerial vehicle and to provide tethered power to the aerial vehicle. In some embodiments, such a tethered configuration may include a wireless transponder for receiving command and control information from the ground station 60 via the tether 50 and to transmit command and control information to the pre-existing aerial vehicle. The tethered configuration may also include power conversion and conditioning circuitry for converting and conditioning the power received over the tether 50 into a form that is usable by the aerial vehicle.

In some examples, the ground station 60 includes a generator for generating power, a base station for conversion of the power from the generator for transmission over the tether 50 and for communicating over the tether 50, and a spooler or winch for managing an amount of deployed tether 50. In some examples, one or more elements of the ground station 60 is attached to a moving vehicle such as a commercial vehicle, construction equipment, military equipment and vehicles, watercrafts, boats and personal vehicles. Switching between tethered operation and battery powered operation is a simple modular switching operation, thereby system flexibility is increased. At the same time, functionality and data transfer capabilities are also increased. Both the advantages of tethered systems (e.g., persistent, secure communications, flight duration unconstrained by on-board battery energy capacity) and free flying systems (e.g., wide range of motion, unconstrained by tether length) are achieved in a single system.

This written description uses examples to disclose the subject matter, and also to enable any person skilled in the art to practice the subject matter, including making and using any devices or systems and performing any incorporated methods. The patentable scope is defined by the claims and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Portions of the embodiments of the present invention may be provided as one or more computer-readable programs or code embodied on or in one or more non-transitory media.

## Claims

1. An ejectable aerial power supply (10) for an unmanned aerial vehicle (UAV) (40), comprising:
- a tether connecting unit (11) having a power supply connector (12) and a communication connector (13), the power supply connector (12) being configured to receive a direct current (DC) supply delivered on a tether (50) connected to the tether connecting unit (11), and the communication connector (13) is equipped with a transfer connection (14) which is configured to transfer communication arriving on the connected tether (50) to the UAV (40) and to transfer communication arriving from the UAV (40) on the connected tether (50),
- a first DC/DC converter (15) fed via the power supply connector (12) and having a supply voltage output (16), the supply voltage output (16) being configured to energize an on-board first flight controller system (41) of the UAV (40),
- a second DC/DC converter (25) fed via the power supply connector (12) and having a charging current output (26), the charging current output (26) being configured to charge an on-board secondary battery (43) of the UAV (40) energizing an on-board second flight controller system (42) of the UAV (40),
- a power control unit (20) controlling a supply voltage on the supply voltage output (16) of the first DC/DC converter (15), and controlling a charging current on the charging current output (26) of the second DC/DC converter (25), wherein the power control unit (20) has at least one network connection (21, 22) for communication with the on-board first flight controller system (41) of the UAV (40), with the on-board second flight controller system (42) of the UAV (40) and with a battery management system (44) of the on-board secondary battery (43) of the UAV (40),
wherein the aerial power supply (10) further comprises
- an ejecting mechanism (30) that can be activated in the case if the on-board first flight controller system (41) of the UAV (40) is not energized by the supply voltage output (16) and the on-board secondary battery (43) of the UAV (40) is not charged by the charging current output (26), the ejecting mechanism (30) having an activated state effecting a separation of the aerial power supply (10) from the UAV (40), and
- a descender device (31) that can be deployed after the aerial power supply (10) is separated from the UAV (40).

2. The aerial power supply (1) according to claim 1, further comprising a power source (32) feeding the ejecting mechanism (30) and controlled by the power control unit (20), wherein the ejecting mechanism (30) is activatable by the power control unit (20) by switching on the feeding of the ejecting mechanism (30).

3. The aerial power supply (1) according to claim 1 or claim 2, further comprising a release mechanism for releasing the descender device (31) upon activation, and a power source (32) feeding the release mechanism and controlled by the power control unit (20), wherein the release mechanism activatable by the power control unit (20) by switching on the feeding of the release mechanism.

4. The aerial power supply (1) according to any of claims 1 to 3, wherein the ejecting mechanism (30) also comprises a safety locking mechanism having a locked state for locking the aerial power supply (10) to the UAV (40), and an unlocked state for enabling the separation of the aerial power supply (10) from the UAV (40) in the activated state of the ejecting mechanism (30).

5. The aerial power supply (1) according to any of claims 1 to 4, wherein the ejecting mechanism (30) comprises at least one electromagnetic piston exerting a separating force for effecting said separation.

6. The aerial power supply (1) according to any of claims 1 to 5, wherein each of the first DC/DC converter (15) and the second DC/DC converter (25) are formed as a galvanically isolated continuous mode resonant DC/DC converter having an input side single-phase inverter (17, 27), a frequency transformer with a resonant tank (18, 28) and an output side single-phase inverter (19, 29) used as an active rectifier.

7. The aerial power supply (1) according to any of claims 1 to 6, wherein the descender device (31) is a paraglider, a parachute or a glider.

8. The aerial power supply (1) according to any of claims 1 to 7, wherein the communication connector (13) comprises a fiber to copper media converter configured to convert communication between an optical communication line of the connected tether (50) and the transfer connection (14).

9. The aerial power supply (1) according to any of claims 1 to 8, wherein the power control unit (20) has two redundant controller area network (CAN) connections (21, 22).

10. The aerial power supply (1) according to any of claims 1 to 9, further comprising a mixed power/signal connector (33) having electric connections for each of the supply voltage output (16), the charging current output (26), the at least one network connection (21, 22) and the transfer connection (14), wherein the mixed power/signal connector (33) is formed with a shape that is complementary to a mating mixed power/signal connector of the UAV (40).

11. An unmanned aerial vehicle system comprising
- an UAV (40) programmed to operate in a tethered flight mode or in an untethered flight mode,
- the aerial power supply (10) according to any of claims 1 to 11, attached to the UAV (40),
- a tether (50) having a first end and a second end, the first end being attached to the tether connecting unit (11) of the aerial power supply (10), and
- a ground station (60) to which the second end of the tether (50) is attached, the ground station (60) having a tether rewind system (61), a landing platform, a communication and data processing system (62) for sending data to and receiving data from the UAV (40) on the tether (50), and a galvanically isolated DC/DC converter (63) converting a ground station voltage level to a tether voltage level for supplying voltage on the tether (50).

12. The unmanned aerial vehicle system according to claim 11, wherein the tether rewind system (61) has an automatic tether tensioner system, a tether force measurement system and a tether angle measurement system.

13. A method for operating the unmanned aerial vehicle system according to claim 11 or claim 12, the method comprising:
operating the UAV (40) in a tethered flight mode wherein the UAV (40) is communicatively connected via the tether (50) to the communication and data processing system (62) of the ground station (60), and upon an ejecting process for ejecting the aerial power supply (10) is initiated,
- checking whether the state of charge of the on-board secondary battery (43) of the UAV (40) is not below a threshold state of charge value, and only continuing the ejecting process if the state of charge of the on-board secondary battery (43) of the UAV (40) is on or above said threshold state of charge value,
- ensuring that the UAV (40) is in a safe position for ejection, including checking whether the UAV (40) is above a first altitude threshold, and if not, maneuvering the UAV (40) up to at least the first altitude threshold,
- setting by the power control unit (20) the supply voltage output (16) to zero V and setting by the power control unit (20) the charging current output (26) to zero A,
- energizing the on-board second flight controller system (42) of the UAV (40) with the on-board secondary battery (43) of the UAV (40),
- separating the aerial power supply (10) from the UAV (40) by activating the ejecting mechanism (30),
- deploying the descender device (31) after the aerial power supply (10) is separated from the UAV (40), and
- regulating the tether voltage level to zero V on the ground station (60).

14. The method according to claim 13, wherein the descender device (31) is a paraglider, and wherein said step of ensuring that the UAV (40) is in a safe position for ejection also includes at least one of the following:
- checking whether the UAV (40) has headwind from the direction of the ground station (60), and if not, maneuvering the UAV (40) to a relative position with respect to the ground station (60) to have at least partial headwind from the direction of the ground station (60),
- checking whether the UAV (40) is within an elevation angle range of 45° - 60° from the ground station (60), and if not, maneuvering the UAV (40) to a relative position with respect to the ground station (60) to be within an elevation angle range of 45° - 60° from the ground station (60).

15. The method according to claim 13 or claim 14, further comprising:
- after the aerial power supply (10) is ejected, rewinding the tether (50) by means of the tether rewind system (61) at least until the aerial power supply is above the landing platform (10) and is below a second altitude threshold from the landing platform.
